# EUROPEAN PATENT APPLICATION

(11) **EP 0 699 640 A1**
(43) Date of publication of application: **06.03.1996**
(21) Application number: 95202122.8
(22) Date of filing: 03.08.1995
(51) Int. Cl.: C04B 33/02, B01J 2/16

(54) **Method for producing granules from ceramic powders, said granules and apparatus for their production**

(30) Priority: 05.08.1994 IT MO940119
(71) Applicant: MANFREDINI E SCHIANCHI S.R.L, I-41049 Sassuolo (Modena) (IT)
(72) Inventor: Manfredini, Umberto, I-41049 Sassuolo, Modena (IT)
(74) Representative: Gardi, Giuliano

(57) **Abstract**

The method allows to obtain a ceramic granulate, for example for the manufature of ceramic tiles, avoiding essication; it comprises the introduction into an agglomerator (5) of ceramic powders and the injection into it of an agglomerating liquid: the agglomerating liquid and/or the powders are introduced in a discontinuous manner through the casing (28) of the said granulator, so as to obtain, at the end of a granulating cycle, a granulate having a humidity suitable for direct use of the granulate in pressing lines; the granulating apparatus comprises a plurality of silos (1) for collecting the ceramic powders connected to a granulator (5) having an outlet from which the granulated is extracted, said outlet of the granulator (5) being directly connected to at least one collecting silo (10; 128) for collecting the granulate.

## Description

The invention concerns a method for agglomerating into granules ceramic powders, such as dry-grinded ceramic powders, or atomized ceramic mixtures, particularly for porcelain gres, relative product and apparatus, that is, a new process to increase the size of the atomized powder grains so as to obtain granules that may be used to manufacture ceramic tiles; also the granulate product obtained in implementing the method being part of the patent application.

The prior art comprises ceramic tiles obtained by pressing, firing and possibly grinding a support including a plurality of granules, polychrome or monochromatic, spread out in a substantially homogeneous matrix, for example consisting of atomized powder, to simulate the effect of natural stone, for example granite.

In the manufacture of such tiles methods are used to agglomerate the atomized powder in which the powder itself is placed inside an agglomerator and agitated by means of a rotor with radial mixing blades; the agglomeration occurs by a progressive and continuous spraying of water by means of injectors passing through the casing, so as to dampen the mass of powder, causing the granulometric growth around agglomeration nuclei that form in the mass itself.

After the agglomeration phase, the granulate is dried, generally in fluid bed driers, after which the dried product is directed to the presses of the ceramic items.

However, during the desiccation, the external surface layer tends to become coriaceous with consequent loss of plasticity in the granules: this, furthermore, makes it difficult to integrate them into the matrix of atomized powder during pressing, leading to microscopic fractures in the tiles after firing inducing fragility and porosity in the finished product.

The difficulty of integrating the granules in the matrix of atomized powder causes the further drawback consisting in the impossibility of manufacturing tiles with a proportion of granules higher than 20%, consequently severely limiting the range of aesthetic effects that can be obtained.

Furthermore the structure of the granules consists of a monochromatic internal nucleus covered in an external layer, generally obtained by spraying a clay-based coloured slurry into the mass of granules as they are forming, generally being of a different colour from the nucleus and coordinated with it to achieve a polychrome aesthetic effect.

However, with the granules obtained using the methods of the prior art, the thickness of the external layer is very limited in relation to the dimension of the nucleus, further limiting the aesthetic effects that can be obtained, conditioned by the prevalence of the colour of the nucleus in relation to the colour of the external layer.

Furthermore the granulation procedure described above is extremely burdensome, is extremely lengthy, with consequently high costs.

Finally, in the agglomeration methods above there is a considerable incidence of rejects during production caused by the non growth of the granules, with a high percentage of powdery residue to be recycled at the end of the process.

The apparatus for the manufature of such granules, in which said methods are implemented, imply the adoption of drying kilns interposed between the granulator and the containers of dried granules.

Such prior art may be subject to considerable improvements with a view to eliminating the said drawbacks.

From the foregoing emerges the need to resolve the technical problem of inventing a new method of aggregating atomized powders that enables the quality of the granules thereby obtained to be improved, particularly as regards improving the plastic properties of the said granules: it being principally necessary to avoid the formation of a rigid external shell around each granule in order to favour the incorporation of the granule in the mass of the support.

A further aspect of the technical problem implied by the invention is that of considerably simplifying the preparation of the granulate whilst limiting the incidence of rejects.

A further aspect of the technical problem is to seplify the apparatus in which granules for ceramic applications are produced.

The invention resolves the said technical problem by adopting an agglomeration method involving the introduction of powders (for example atomized powders) into an agglomerator and the injection through it of an agglomerating liquid, for example water based: it being envisaged that the agglomerating liquid and/or the powders are introduced in a discontinuously through the casing of the agglomerator, so as to obtain, at the end of an agglomeration cycle, a granulate with a humidity that enables it to be used directly in the presses.

In order to obtain a granulate that is suitable to be used directly in the presses, without having to dry it after the granulation, in the method according to the invention most of the agglomeration liquid has to be introduced into the mass of atomized powder at the beginning of the cycle, so as to obtain the formation of agglomeration nuclei that are very damp and compact, with the subsequent introduction of powders with a degree of humidity which is substantially lower than that of said nuclei to dehumidify them by attaching themselves to them so as to provide a granulate with an optimal humidity and which does not have a coriaceous external shell.

The atomized powders can be introduced into the granulator discontinuously, that is with successive charges, or with a continuous cycle: in the continuous cycle version, the introduction of the atomized powder and the agglomerating liquid occurs in axially consecutive sections of the granulator.

One of the advantages offered by the invention is the elimination of the onerous drying phase of the granulate before it is pressed, with simultaneous considerable improvement in the quality of the finished product and reduction in the amount of reject product: thereby achieving a drastic reduction in the production cycle costs of said granulate.

In a particularly advantageous version the overall quantity of atomized, or dry-grinded, powders has to be preferably less than 1/10 of the volume of the granulator at the beginning of the cycle and up to about 1/3 of the volume of the granulator at the end of the cycle.

In a discontinuous cycle the manner in which the atomized powder and/or the agglomerating liquid is introduced can be coordinated as described below.

A first part, for example 1/3, of the overall quantity of atomized powders is kept agitated in the granulator while most of the agglomerating liquid required, for example 75 - 90% of the total, is injected into the mass of powder.

A second part, corresponding to approximately 1/3 of the overall quantity of atomized powders, is added to said first part, continuing the mixing, with the introduction of a small quantity of the agglomerating liquid, for example corresponding to approximately 5% of the overall quantity of agglomerating liquid.

A third part, corresponding to approximately 1/3 of the overall quantity of atomized powder, is added to said first and second parts, continuing the mixing, with the introduction of a small quantity of the agglomerating liquid, for example corresponding to approximately 5% of the overall quantity of agglomerating liquid.

The mixing of the powder and/or granulate in the granulator during the introduction of the first, second and third parts of the powders is achieved by radial mixing blades attached to a rotating shaft supported inside the casing of the said granulator: the speed of rotation of the said shaft being preferably progressively diminishing, in function also of the type of powders being used, so as to avoid breaking up the granules being formed caused by the action of the said mixing blades.

It has been found experimentally that the speed of rotation can be reduced by approximately 20% from the introduction of the first part of the powder to the introduction of the second part of powder and by approximately 15% from the introduction of the second part of powder to the introduction of the third part of powder.

The agglomerating liquid can advantageously comprise a solution of water and possible additives, for example glueing agents, or colouring, with a percentage, for example, of approximately 2%.

As an alternative, the agglomerating liquid may comprise slurry, that is a aqueous suspension of the same powders formig the granulate, having the same colour as the nucleo, or a different colour, in order to achieve a further variety of aestethic effects, for example showing elegant shadings of colour.

The composition of the slurry comprises an amount of water around 35 - 50 % of the mass of ceramic powders.

Very good results have been obtained in practical experiments, since the part of ceramic powders contained into the slurry further improves the plastic properties of the granules.

The method according to the invention makes it possible to obtain granules having a humid nucleus and a compliant outer layer, property that improves its suitability for the subsequent pressing.

In the method according to the invention, it is possible to obtain a granulate consisting of a number of types of powders, having differing colours and/or granulometries, associated with the same nucleus in concentric layers: the thickness of each layer being possibly of the same order of magnitude as the nucleus, or even greater, the size of the granules obtained being of up to approximately 2 or more centimeters.

It is noted that the granules obtained in implementing the said method are evenly rounded in shape; furthermore, due to the ease with which they can be incorporated in the matrix of atomized powder in a stable and homogeneous manner, they can be included in particularly high percentages, even up to 50% or more.

In a further aspect of the invention, an agglomerating apparatus is provided comprising a plurality of silos for storing the ceramic powders coupled to a granulator having an outlet from which the granulate product is extracted, caracterised in that said outlet of the granulator is connected to at least one collecting silo for collecting the granulate, no drying means beeing interposed between said granulator and said at least one collecting silo.

This allows elimination of the costs related to the management of the drying means for drying the granulate.

In a particularly advantageous version, said at least one collecting silo has an outlet connected to at least one storage silo for storing the granulated, when crumbled, by the interposition of a crumbling machine.

In a further particularly advantageous version, said outlet of the granulator is connected to at least one collecting silo for collecting the granulate and, in parallel with said at least one collecting silo, to a storage silo for storing the granulated, when grinaded, by the interposition of a crumbling machine.

In still a further advantageous embodiment, the outlets of said at least one collecting silo for collecting the granulated and of said at least one storage silo for storing the crumbled granulated are connected, by a mixing machine, to a feeding silo for feeding the presses.

The apparatus described above allows a great reduction of the number of silos required for the production of ceramic tiles; in fact it is no more necessary, as it is in the prior art apparatus, to provide groups of collecting silos for collecting the granulated, being it possible to produce the granulated only when, and in the quantities in which, it is requires by the presses.

A way of putting the invention into practice is illustrated, purely by way of example, in the four tables of drawings attached, in which:

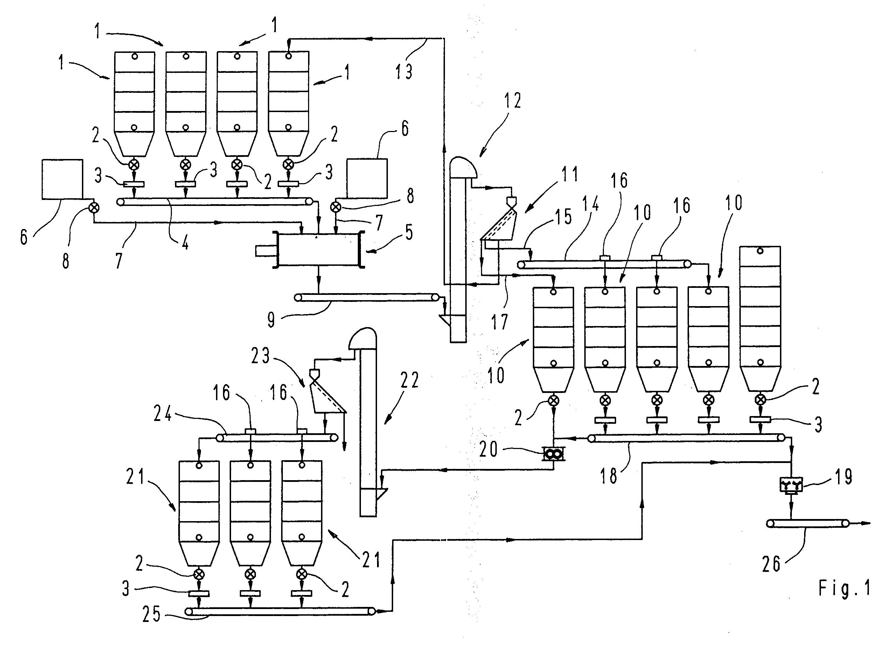

Figure 1 is a schematic view of a plant for agglomerating atomized powder for use in the ceramics industry, suitable for implementing the method;

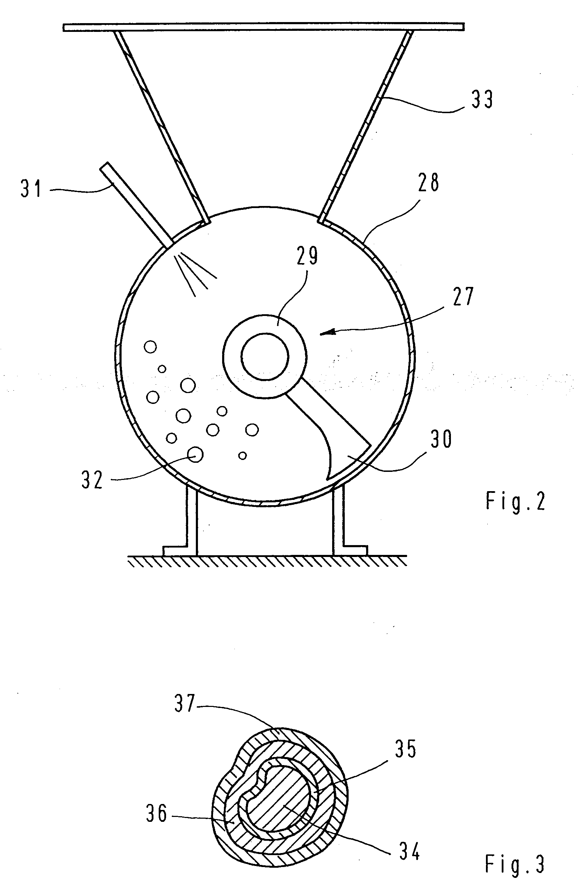

Figure 2 is a highly schematic transverse section of a granulator suitable for implementing the method according to the invention, in the version having a discontinuous cycle;
Figure 3 is a transverse section of a granule obtained implementing the method;
Figure 4 is a schematic view of a granulating apparatus according to a first variation;
Figure 5 is a view as in Figure 4, but in a further variation.

The plant for implementing the agglomerating method as described includes a number of silos 1 for storing the powders, advantageously atomized powders, the outlet section of each silo being controlled by a discharge valve 2 for depositing the atomized powder onto an underlying weighing belt 3 for the powder.

The weighing belts 3 convey the atomized powder, in the proportions required for the granulation, onto a first conveyor belt 4 supplying a granulator 5 for the agglomeration of the atomized powder into granules having dimensions of, indicatively, between a few millimeters and approximately 20 millimeters or more.

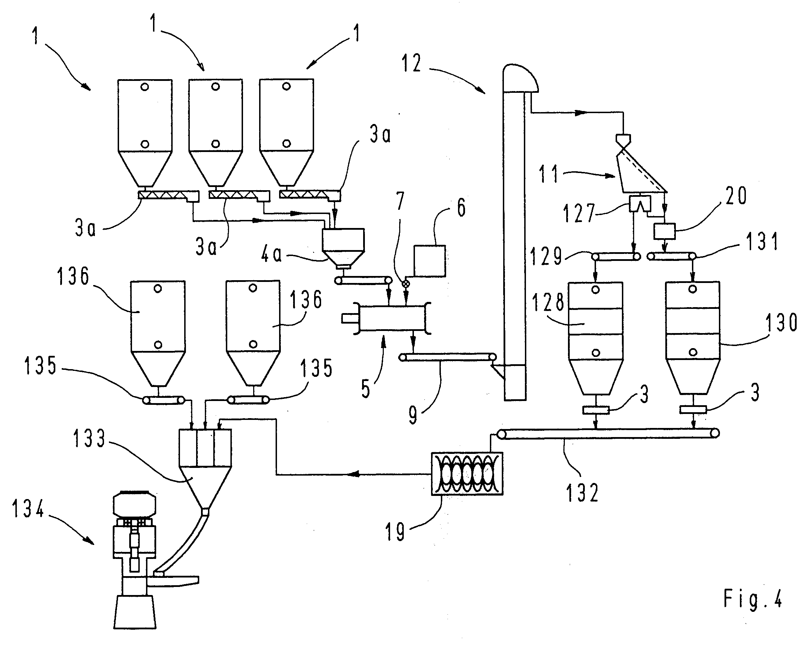

Instead of the weighing belts 3, screw conveyors 3a (Figure 4) may be provided for supplying a weighing machine 4a which allows a controlled feeding of the powders into the granulator 5.

Agglomeration liquid, for example water, is brought to the granulator 5, extracted from tanks 6 by means of supply lines 7 controlled by flow control valves 8.

The granulate is extracted from the granulator 5 and sent, by means of a second conveyor belt 9, to a number collecting silos 10, via a two-stage, vibrating, grading sieve 11, fed by a first bucket elevator 12 and having a powder recovery line 13.

Between the sieve 11 and the collecting silos 10 there is a third conveyor 14 fed with the granulated of the second sieving stage by a feeding line 15 and supplying each collecting silo by means of deviator baffles 16: the granulate with the largest dimensions and therefore retained at the first sieving stage is sent directly to one of the collecting silos 10 along line 17.

Collecting silos 10, as with silos 1, have control valves 2 and weighing belts 3 to supply a third conveyor belt 18 supplying a mixer 19 and/or crusher 20, this last being connected to a number of storage silos 21 for the granulated and crushed product.

Between the crusher 20 and the said storage silos 21 a second bucket elevator 22 and relative sieve 23, a fourth conveyor belt 24 with baffles 16 are interposed.

The storage silos 21 pour the product, in a controlled manner, onto a fifth conveyor belt 25 that sends it to mixer 19 and from here, by means of a sixth conveyor belt 26 to the pressing lines not shown.

The granulator 5 has an internal rotor 27 rotatably driven with respect to the casing 28 by driving means not shown consisting of a shaft 29 having on its periphery mixing blades 30 for the granulate 32 and/or powders. The agglomerating liquid is injected through the casing 28 by means of injectors 31; the atomized powders are introduced into casing 28 by means of hopper 33.

In the version of apparatus shown in Figure 4, the granulated extracted from the outlet of the granulator 5 is conveyed to the elevator 12 and, from here, after a grading sieve11, supplied, by means of a partitioning valve 127, partly to a storage silo 128 for storing the granulate by means of a seventh conveyor 129, partly to a crushing machine 20 for crushing the granules, which is also supplied with the sieving residue.

The crushed granulate, after being extracted by the crushin machine 20, is supplied to a storage silo 130 for storing the crushed material by means of an eighth conveyor 131.

The outlets of the collecting silos 128 and of the storage silos 130 are connected to weighing conveyors 3 feeding, by means of a nineth silo 132 integral granuled and crushed granuled to a mixer 19 from which the mixed material is supplied to a feeding silo 133 feeding a press 134.

The feeding silo 133 also receives atomized powders in one or more colours by means of further conveyors 135, said powders being collected into silos 136 and being destined to the formation of the matrix of the tile.

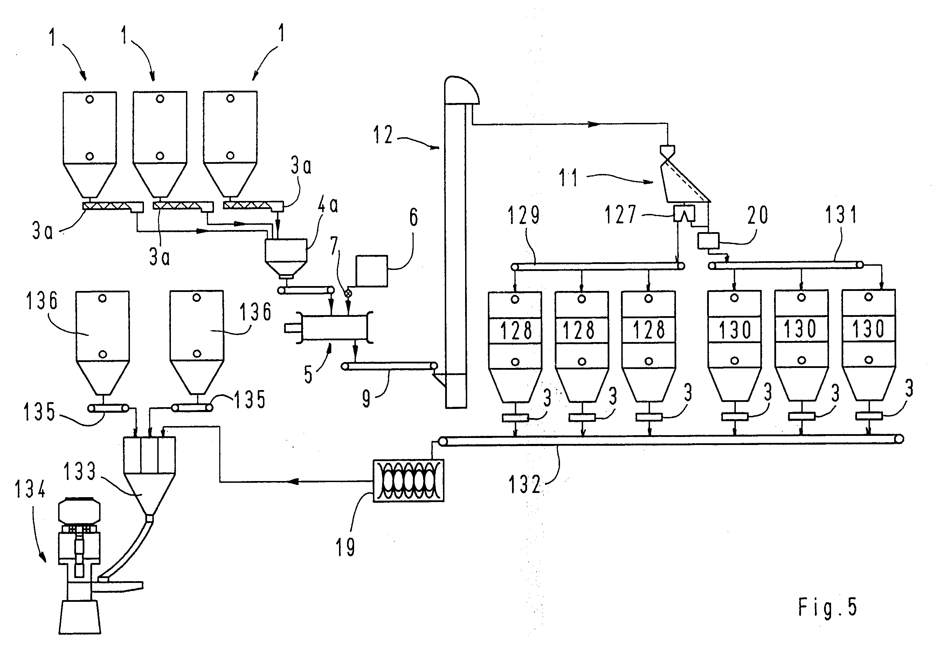

Figure 5 shows an apparatus similar to that of Figure 4, but having a plurality of collecting silos 128 for collecting the granulate and of storage silos for storing the crushed granulate connected in parallel.

The choice of the number of silos depends on the productivity of the pressing apparatus which has to be be supplied.

A granulate obtained implementing the method as described can consist of a nucleus 34 onto which a number of concentric layers 35, 36, 37 are anchored one on top of the other, consisting of atomized powder, having a thickness of even a few millimeters, up to, indicatively, the same order of magnitude as the nucleus, or even more.

In practice, the materials, dimensions and details of execution may be different from but technically equivalent to those described without departing from the juridical domain of the present invention.

## Claims

1. A method for producing granules for ceramic powders, comprising the introduction into an agglomerator (5) of ceramic powders and the injection into it of an agglomerating liquid, characterised in that the agglomerating liquid and/or the powders are introduced in a discontinuous manner through the casing (28) of the said granulator.

2. A method as claimed in claim 1, wherein the major part of the agglomerating liquid is introduced into the mass of atomized powder at the start of the agglomerating cycle, with the subsequent introduction of powders having a substantially lower humidity than that of the said nuclei.

3. A method as claimed in claim 2, wherein the atomized powders are introduced into the granulator (5) discontinuously.

4. A method as claimed in claim 2, wherein the atomized powder is introduced into the granulator (5) continuously.

5. A method as claimed in one of the preceding claims, wherein the quantity of atomized powder is less than about 1/10 of the volume of the granulator (5) and the overall quantity of powders inserted into the granulator is about 1/3 of the volume of the granulator.

6. A method as claimed in claim 5, or 3, wherein the introduction of powders into the granulator (5) are coordinated as follows:
- a first part of the overall quantity of atomized powder is kept agitated into the granulator whilst the major part of the overall quantity of the agglomerating liquid is injected into the body of powder;
- a second part of the overall quantity of atomized powder is added to the said first part, continuing the agitation, with the introduction of a small amount of the overall quantity of the agglomerating liquid;
- a third part of the overall quantity of atomized powder is added to the said first and second parts, continuing the agitation, with the introduction of a small amount of the agglomerating liquid.

7. A method as claimed in claim 6, wherein the said first, second and third parts correspond to approximately 1/3 of the overall quantity of the atomized powder.

8. A method as claimed in claim 6, wherein the major part of the quantity of agglomerating liquid corresponds to non more than 90% of the overall quantity of liquid required.

9. A method as claimed in claim 6, wherein the small amount of the quantity of agglomerating liquid corresponds to non less 5% of the overall quantity of liquid envisaged.

10. A method as claimed in one of claims 6 to 9, wherein the agitation of the powder and/or granulate in the granulator (5) during the introduction of the first, second and third parts of the powder is achieved with radial mixing blades (30) attached to a rotating shaft (29) inside the casing (28) of the granulator (5): the speed of rotation of the said shaft (29) being preferably progressively diminishing during the granulation cycle.

11. A method as claimed in claim 10, wherein between the introduction of the first part of the powder and the introduction of the second part of the powder a reduction in the speed of rotation is achieved of approximately 20%.

12. A method as claimed in claim 10, wherein between the introduction of the second part of the powder and the introduction of the third part of the powder a reduction in the speed of rotation is achieved of approximately 15%.

13. A method for producing granules from ceramic powders, comprising the introduction into an agglomerator (5) of atomized powder and the injection into it of an agglomerating liquid, characterised in that, after the phase of agglomeration of the powder into granules and before pressing the product is not desiccated.

14. A product, obtainable by implementing the method of the preceding claims, characterised in that it consists of a number of types of powders, each having differing colours and/or granulometries, associated with the same nucleus (34) in the form of substantially concentric layers (35, 36, 37): the thickness of each layer being substantially of the same order of magnitude as the size of the nucleus so as to obtain granules with sizes of even close to 2 centimeters or more.

15. An apparatus for producing granules from ceramic powders, comprising a plurality of silos (1) for collecting the ceramic powders connected to a granulator (5) having an outlet from which the granulated is extracted, characterised in that, said outlet of the granulator (5) is connected to at least one collecting silo (10; 128) for collecting the granulate without the interposition of any drying means.

16. An apparatus as claimed in claim 15, wherein said at least one collecting silo (10; 128) for collecting the granulate has a respective outlet connected to at least one storage silo (21; 121) for storing he crushed granulate by the interposition of a crushing machine (20).

17. An apparatus as claimed in claim 15, wherein said outlet of the granulator (5) is connected to at least one collecting silo (128) for collecting the granulate and, in parallel with said collecting silo (128), to a storage silo (130) for storing the crushed granulate with the interposition of a crushing machine (20).

18. An apparatus as claimed in claim 16, or 17, wherein the outlets of said at least one cllecting sio (10; 128) for collecting the granulate and of said storage silo (21; 121) for storing the crushed granulate are connected, by means of a mixing machine, to a feeding silo (133) for feeding the presses (134).
